# FASCICULE DE BREVET EUROPEEN

(11) **EP 2 139 768 B1**
(45) Date de publication et mention de la délivrance du brevet: **30.11.2011**
(21) Numéro de dépôt: 08736396.6
(22) Date de dépôt: 18.04.2008
(51) Int. Cl.: B64D 27/26

(54) **MAT D'ACCROCHAGE DE MOTEUR POUR AERONEF DISPOSANT D'UNE ATTACHE MOTEUR ARRIERE POURVUE D'UN ECROU A BARILLET**
FLUGZEUGMOTORBEFESTIGUNGSPYLON MIT EINER MIT EINER TONNENMUTTER VERSEHENEN HINTEREN MOTORBEFESTIGUNG
AIRCRAFT ENGINE ATTACHMENT PYLON THAT HAS AN ENGINE REAR ATTACHMENT FITTED WITH A BARREL NUT

(30) Priorité: 20.04.2007 FR 0754608
(43) Date de publication de la demande: 06.01.2010
(73) Titulaire: AIRBUS OPERATIONS, 31060 Toulouse (FR)
(72) Inventeur: MARTINOU, Jean-Marc, F-31240 L'union (FR); BERJOT, Michael, F-31200 Toulouse (FR)
(74) Mandataire: Ilgart, Jean-Christophe
(86) Numéro de dépôt international: PCT/EP2008/054754
(87) Numéro de publication internationale: WO 2008/132077

(56) Documents cités:
- EP-A- 1 266 826
- FR-A- 2 770 486
- FR-A- 2 887 851

## Description

### DOMAINE TECHNIQUE

La présente invention se rapporte de façon générale à un ensemble moteur pour aéronef, du type comprenant un moteur, un mât d'accrochage, ainsi qu'un système de montage du moteur pourvu d'une pluralité d'attaches moteur et étant interposé entre une structure rigide du mât d'accrochage et le moteur.

L'invention se rapporte également à un tel mât d'accrochage de moteur d'aéronef.

L'invention peut être utilisée sur tout type d'aéronef équipé par exemple de turboréacteurs ou de turbopropulseurs.

Ce type de mât d'accrochage, également appelé « EMS » (de l'anglais « Engine Mounting Structure »), permet par exemple de suspendre un turbomoteur au-dessous de la voilure de l'aéronef, ou bien de monter ce turbomoteur au-dessus de cette même voilure.

### ÉTAT DE LA TECHNIQUE ANTÉRIEURE

Un tel mât d'accrochage est en effet prévu pour constituer l'interface de liaison entre un moteur tel qu'un turboréacteur et une voilure de l'aéronef. Il permet de transmettre à la structure de cet aéronef les efforts générés par son turboréacteur associé, et autorise également le cheminement du carburant, des systèmes électriques, hydrauliques, et air entre le moteur et l'aéronef.

Afin d'assurer la transmission des efforts, le mât comporte une structure rigide, souvent du type « caisson », c'est-à-dire formée par l'assemblage de longerons supérieur et inférieur et de deux panneaux latéraux raccordés entre eux par l'intermédiaire de nervures transversales.

D'autre part, le mât est muni d'un système de montage du moteur interposé entre le turboréacteur et la structure rigide du mât, ce système comportant globalement au moins deux attaches moteur, généralement une attache avant et une attache arrière.

De plus, le système de montage comprend un dispositif de reprise des efforts de poussée générés par le turboréacteur. Dans l'art antérieur, ce dispositif prend par exemple la forme de deux bielles latérales raccordées d'une part à une partie arrière du carter de soufflante du turboréacteur, et d'autre part à l'attache moteur arrière fixée sur le carter de ce dernier.

De la même façon, le mât d'accrochage comporte également un second système de montage interposé entre la structure rigide de ce mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques.

Dans les réalisations de l'art antérieur, le système de montage du moteur comporte une attache moteur arrière dont le corps est rapporté sur le caisson par l'intermédiaire de ferrures latérales fixées sur le caisson. Celles-ci disposent habituellement d'une première portion percée de trous d'assemblage pour sa fixation sur un panneau latéral du caisson, et comportent en outre une seconde portion définissant une surface de fixation en contact avec une surface de fixation prévue sur le corps d'attache moteur arrière, tel que cela est par exemple décrit dans le document FR 2 887 851. L'attache moteur arrière est de ce fait capable d'assurer la reprise des efforts selon la direction verticale.

Avec ce type de réalisation, la seconde portion définissant la surface de fixation est généralement déportée latéralement par rapport au caisson, afin de procurer une accessibilité satisfaisante à l'opérateur, notamment en vue de la mise en place de boulons destinés à traverser les deux surfaces de fixation en contact.

Cette configuration implique diverses inconvénients, parmi lesquels on compte celui lié à l'introduction d'un moment parasite de flexion dans le caisson, selon la direction longitudinale, en raison précisément du décalage dans la direction transversale rencontré entre les première et seconde portions des ferrures latérales.

De plus, le fait de prévoir les surfaces de fixation du corps d'attache moteur arrière à l'extérieur du caisson et latéralement par rapport à celui-ci, pour les raisons d'accessibilité évoquées ci-dessus, conduit à réaliser un corps d'attache moteur arrière s'étendant latéralement sur une distance nécessairement supérieure à celle de la largeur du caisson. Or cette configuration conduit donc les extrémités latérales du corps d'attache moteur arrière à constituer des obstacles importants dans la zone d'écoulement du flux secondaire, et provoque par voie de conséquence des perturbations aérodynamiques élevées, provoquant une traînée se traduisant par des pertes de performances de l'aéronef.

### EXPOSÉ DE L'INVENTION

L'invention a donc pour but de proposer un mât d'accrochage de moteur pour aéronef remédiant au moins partiellement aux inconvénients mentionnés ci-dessus, relatifs aux réalisations de l'art antérieur.

Pour ce faire, l'invention a pour objet un mât d'accrochage de moteur pour aéronef, ledit mât comportant une structure rigide formant caisson ainsi qu'un système de montage du moteur monté fixement sur ladite structure rigide et comportant notamment une attache moteur arrière comprenant un corps d'attache sur lequel est articulée au moins une manille, l'attache moteur arrière présentant au moins une ferrure latérale disposée de chaque côté du caisson, chaque ferrure latérale comprenant une première portion percée de premiers trous d'assemblage pour sa fixation sur ledit caisson, et comportant une seconde portion définissant une surface de fixation en contact avec une surface de fixation prévue sur le corps d'attache moteur arrière.

Selon l'invention, ladite seconde portion présente un orifice de logement dont l'axe est orienté selon une direction longitudinale du mât, cet orifice logeant un écrou à barillet recevant une vis de fixation en appui contre le corps d'attache moteur arrière et orientée selon une direction verticale du mât, et en ce que le plan comprenant l'axe dudit orifice de logement et l'axe vertical de ladite vis de fixation traverse lesdits premiers trous d'assemblage.

Ainsi, l'invention permet globalement de supprimer la déportation latérale rencontrée antérieurement entre la première portion et la seconde portion de chaque ferrure latérale.

En effet, en coupe transversale, il est prévu une sorte d'alignement, de préférence dans la direction verticale, entre l'orifice de logement servant au raccordement sur le corps d'attache, et les premiers trous d'assemblage servant au raccordement sur le caisson, même si ces orifice/trous peuvent être pratiqués selon des directions différentes. Cet alignement, caractérisé par le fait qu'ils sont chacun traversé par l'axe de la vis de fixation en coupe transversale ou en vue de face, permet de n'induire aucun moment longitudinal parasite lié à la reprise des efforts selon la direction verticale. Ces efforts verticaux peuvent alors transiter successivement à travers le corps d'attache moteur arrière, la vis de fixation en appui sur ce dernier, l'écrou à barillet coopérant avec la vis de fixation, la ferrure latérale logeant l'écrou à barillet, puis enfin le caisson portant la ferrure latérale.

En outre, toujours en raison de l'absence de déport entre les première et seconde portions de chaque ferrure latérale, l'invention proposée permet de procurer un avantage en terme de performances aérodynamiques, étant donné que les extrémités latérales du corps d'attache moteur arrière ne nécessitent plus de s'étendre latéralement aussi largement que dans l'art antérieur. A cet égard, il est noté que la conception adoptée permet de placer les surfaces de fixation au moins en partie sous le caisson, donc sous le longeron inférieur, et non plus exclusivement latéralement par rapport à ce dernier. Les perturbations aérodynamiques au droit de l'attache moteur arrière sont ainsi diminuées.

De préférence, ladite structure rigide formant caisson présente deux panneaux latéraux ainsi qu'un longeron faisant face au corps d'attache moteur arrière, ledit longeron comportant deux ailes latérales montées fixement respectivement sur lesdits deux panneaux latéraux, et ladite première portion de chacune desdites deux ferrures latérales de l'attache arrière est interposée entre l'une desdites deux ailes latérales et son panneau latéral associé. En d'autres termes, la ferrure latérale est avantageusement plaquée de part et d'autre entre les deux éléments précités, de préférence en étant en contact avec chacun d'eux, ce qui permet par ailleurs aux moyens d'assemblage traversant les premiers trous de la ferrure latérale d'être sollicités en double cisaillement, pour une meilleure introduction des efforts dans le caisson.

De préférence, ledit longeron comporte un renfoncement pour le logement de chaque première portion, ce qui permet avantageusement de conserver le panneau latéral associé sensiblement plan, malgré la présence de ces ferrures latérales. Ceci présente bien évidemment un intérêt particulier en terme d'aérodynamique.

Préférentiellement, ledit orifice de logement recevant l'écrou à barillet se trouve agencée entièrement extérieurement par rapport à la structure rigide formant caisson, entre cette dernière et ledit corps d'attache moteur arrière, à savoir sous le longeron inférieur de caisson dans le cas non limitatif où le moteur est destiné à être suspendu sous la voilure de l'aéronef. Néanmoins, cet orifice de logement placé sous le longeron inférieur pourrait faire en partie saillie latéralement du caisson, donc faire saillie latéralement par rapport de son panneau latéral de caisson associé, sans sortir du cadre de l'invention.

Quoi qu'il en soit, son placement au-dessous du longeron inférieur, donc extérieurement par rapport au caisson, lui permet d'être facilement accessible pour un opérateur lors du montage du moteur sur le mât d'accrochage.

Ainsi, dans le cas où le moteur est destiné à être suspendu sous la voilure de l'aéronef, et où ledit caisson est formé par l'assemblage d'un longeron supérieur, d'un longeron inférieur, de deux panneaux latéraux et de nervures transversales reliant lesdits longerons et panneaux, ladite surface de fixation et ledit corps d'attache moteur arrière sont situés sous et à distance du longeron inférieur.

De préférence, ladite attache moteur arrière comporte en outre au moins un pion de cisaillement vertical traversant le corps d'attache, ledit pion de cisaillement étant capable d'assurer la reprise des efforts s'exerçant selon une direction transversale dudit mât.

De préférence, la surface de fixation de chacune des ferrures latérales de l'attache arrière prend la forme d'une surface plane orientée selon un plan défini par la direction transversale et une direction longitudinale du mât.

De manière préférée, chacune des ferrures latérales de l'attache arrière est réalisée d'un seul tenant, et de préférence en titane.

Il est indiqué que l'attache arrière est préférentiellement conçue de manière à définir deux demi-attaches chacune capable d'assurer la reprise des efforts s'exerçant selon une direction verticale du mât.

L'invention a également pour objet un ensemble moteur pour aéronef comprenant un mât tel que celui qui vient d'être présenté, ainsi qu'un moteur fixé sur ce mât.

Enfin, elle a pour objet un aéronef comprenant au moins un tel ensemble moteur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partiellement schématique de côté d'un ensemble moteur pour aéronef, comprenant un mât d'accrochage selon un mode de réalisation préféré de la présente invention ;
- la figure 2 représente une vue schématisant la reprise des efforts effectuée par chacune des attaches moteur de l'ensemble montré sur la figure 1,
- la figure 3 représente une vue partielle en coupe transversale du mât montré sur la figure 1 ;
- la figure 4 représente une vue en coupe prise selon la ligne IV-IV de la figure 3 ;
- la figure 5 représente une vue partielle de côté du mât montré sur les figures précédentes ; et
- la figure 6 représente un écrou à barillet appartenant à l'attache moteur arrière du mât montré sur les figures précédentes.

### EXPOSÉ DÉTAILLÉ DE MODES DE RÉALISATION PARTICULIERS

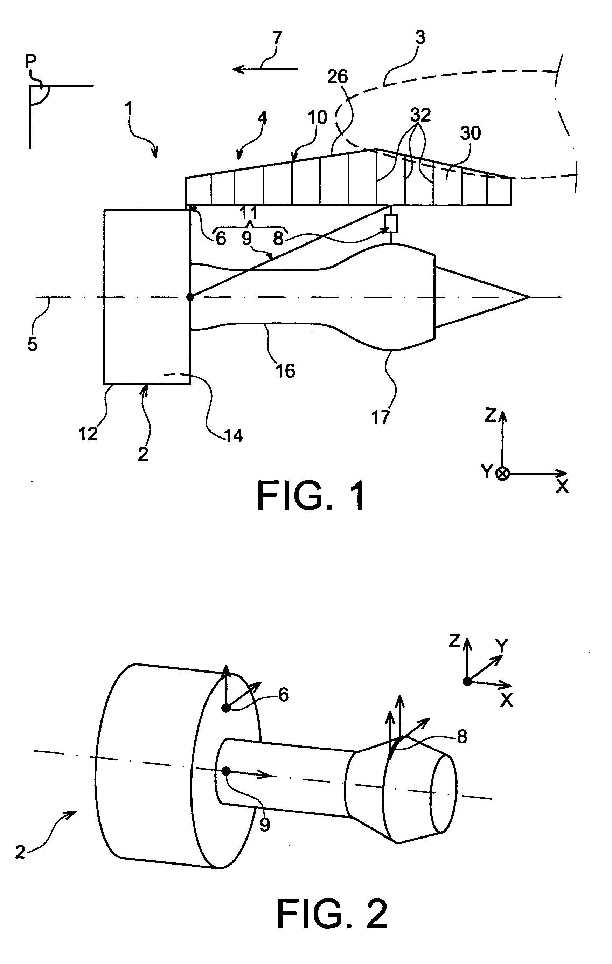

En référence à la figure 1, on voit un ensemble moteur 1 pour aéronef destiné à être fixé sous une aile 3 de cet aéronef, cet ensemble 1 objet de la présente invention étant pourvu d'un mât d'accrochage 4 se présentant sous la forme d'un mode de réalisation préféré de la présente invention.

Globalement, l'ensemble moteur 1 comporte un moteur tel qu'un turboréacteur 2 et le mât d'accrochage 4, ce dernier étant notamment muni d'une structure rigide 10 et d'un système de montage du moteur 11 composé d'une pluralité d'attaches moteur 6, 8 et d'un dispositif de reprise des efforts de poussée 9 généré par le turboréacteur 2, le système de montage 11 étant donc interposé entre le moteur et la structure rigide 10 précitée, cette dernière étant également dénommée structure primaire. A titre indicatif, il est noté que l'ensemble 1 est destiné à être entouré d'une nacelle (non représentée sur cette figure), et que le mât d'accrochage 4 comporte une autre série d'attaches (non représentées) permettant d'assurer la suspension de cet ensemble 1 sous la voilure de l'aéronef.

Dans toute la description qui va suivre, par convention, on appelle X la direction longitudinale du mât 4 qui est également assimilable à la direction longitudinale du turboréacteur 2, cette direction X étant parallèle à un axe longitudinal 5 de ce turboréacteur 2. D'autre part, on appelle Y la direction orientée transversalement par rapport au mât 4 et également assimilable à la direction transversale du turboréacteur 2, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que seuls le dispositif de reprise 9, les attaches moteur 6, 8, et la structure rigide 10 du mât d'accrochage 4 ont été représentées. Les autres éléments constitutifs non représentés de ce mât 4, tels que les moyens d'accrochage de la structure rigide 10 sous la voilure de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

Le turboréacteur 2 dispose à l'avant d'un carter de soufflante 12 de grande dimension délimitant un canal annulaire de soufflante 14, et comporte vers l'arrière un carter central 16 de plus petite dimension, renfermant le coeur de ce turboréacteur. Enfin, le carter central 16 se prolonge vers l'arrière par un carter d'éjection 17 de plus grande dimension que celle du carter 16. Les carters 12, 16 et 17 sont bien entendu solidaires les uns des autres.

Comme on peut l'apercevoir sur la figure 1, le système 11 est constitué par une attache moteur avant 6, une attache moteur arrière 8 formant en réalité deux demi-attaches arrière, ainsi qu'une attache 9 formant un dispositif de reprise des efforts de poussée générés par le turbomoteur 2. Comme cela est montré schématiquement sur le figure 1, ce dispositif 9 prend la forme de deux bielles latérales (une seule étant visible en raison de la vue de côté) raccordées d'une part à une partie arrière du carter de soufflante 12, et d'autre part à un palonnier monté sur l'attache arrière 8. Une alternative pourrait consister à monter ce palonnier à un point distinct de celui de l'attache moteur arrière, sans sortir du cadre de l'invention.

L'attache moteur avant 6 est solidarisée au carter de soufflante 12, et est conçue de manière à pouvoir reprendre des efforts générés par le turboréacteur 2 selon les directions Y et Z, à l'aide des deux manilles/biellettes. A titre indicatif, cette attache avant 6 pénètre de préférence dans une portion d'extrémité circonférentielle du carter de soufflante 12.

L'attache moteur arrière 8 constitue une particularité de l'invention et sera plus amplement détaillée en référence aux figures suivantes. Elle est globalement interposée entre le carter d'éjection 17 et la structure rigide 10 du mât. Elle est quant à elle conçue pour former deux demi-attaches disposées de façon symétrique par rapport à un plan P défini par l'axe 5 et la direction Z, chacune de ces demi-attaches étant conçue de manière à pouvoir reprendre des efforts générés par le turboréacteur 2 selon la direction Z, mais pas ceux s'exerçant selon les directions X et Y. Cependant, on peut prévoir que cette attache arrière est aussi en mesure de reprendre, avec une portion centrale, des efforts générés par le turboréacteur 2 selon la direction Y, tel que cela est représenté sur la figure 2.

De cette manière, comme on peut le voir schématiquement sur la figure 2, la reprise des efforts s'exerçant selon la direction X s'effectue à l'aide du dispositif 9, la reprise des efforts s'exerçant selon la direction Y s'effectue à l'aide l'attache avant 6 et de la portion centrale de l'attache arrière, et la reprise des efforts s'exerçant selon la direction Z s'effectue conjointement à l'aide de l'attache avant 6 et des deux demi-attaches arrière.

D'autre part, la reprise du moment s'exerçant selon la direction X s'effectue verticalement à l'aide des deux demi-attaches de l'attache 8, la reprise du moment s'exerçant selon la direction Y s'effectue verticalement à l'aide des deux demi-attaches de l'attache 8 conjointement avec l'attache 6, et la reprise du moment s'exerçant selon la direction Z s'effectue transversalement à l'aide de la portion centrale de l'attache 8, conjointement avec l'attache 6.

A nouveau en référence à la figure 1, on peut apercevoir que la structure 10 présente la forme d'un caisson s'étendant dans la direction X, ce caisson étant également appelé caisson de torsion. Il est classiquement formé par un longeron supérieur 26 et un longeron inférieur 28, ainsi que par deux panneaux latéraux 30 (un seul étant visible sur la figure 1) s'étendant tous les deux selon la direction X et sensiblement dans un plan XZ. A l'intérieur de ce caisson, des nervures transversales 32 agencées selon des plans YZ et espacées longitudinalement viennent renforcer la rigidité du caisson. Il est noté à titre indicatif que les éléments 26, 28 et 30 peuvent chacun être réalisés d'un seul tenant, ou bien par l'assemblage de sections jointives, qui peuvent éventuellement être légèrement inclinées les unes par rapport aux autres. Néanmoins, ici, le longeron inférieur 28 s'étend de préférence dans un plan incliné par rapport à l'horizontale, sur toute sa longueur, comme montré sur la figure 1. L'inclinaison est telle que le longeron inférieur 28, parallèle à la direction Y, se rapproche de l'axe 5 en allant vers l'arrière, dans le but de se rapprocher du carter d'éjection 17 afin de permettre la mise en place de l'attache moteur arrière 8.

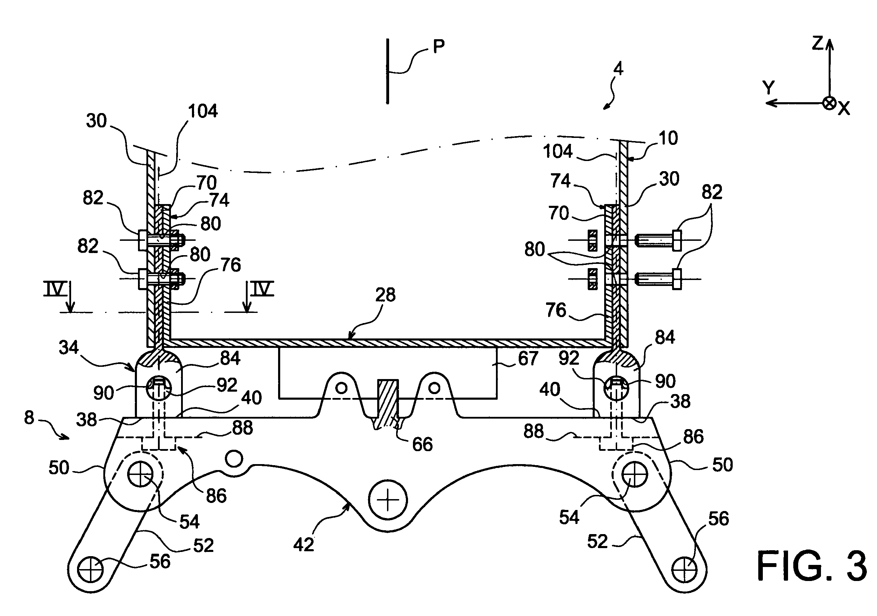

En référence aux figures 3 à 6, on peut voir l'attache moteur arrière 8 dont certains éléments ont été volontairement omis, pour des raisons évidentes de clarté.

Il va tout d'abord être décrit la partie de l'attache 8 formant les deux demi-attaches arrière assurant chacune uniquement la reprise des efforts s'exerçant selon la direction Z, et étant agencées symétriquement par rapport au plan P précité.

Les deux demi-attaches arrière étant donc identiques, seule celle de droite vue depuis l'arrière vers l'avant, sera détaillée ci-après. Globalement, celle-ci comprend une ferrure latérale 34 présentant de préférence un plan de symétrie orienté selon les directions Y et Z, cette ferrure 34 étant rapportée fixement et directement sur le panneau latéral associé 30 du caisson, d'une manière qui sera décrite ultérieurement.

La ferrure 34 s'étend verticalement sur le panneau latéral 30 sur lequel elle est rapportée fixement par boulonnage/éclissage, et se prolonge vers le bas au-delà du longeron inférieur 28, en direction du moteur. Elle se termine donc en porte-à-faux en définissant une surface de fixation 38 en contact avec une surface de fixation 40 prévue sur un corps 42 de l'attache moteur arrière, assimilable à une poutre transversale réalisée d'un seul tenant.

Les surfaces en contact 38 et 40, agencées à distance du longeron inférieur 28 en direction du moteur, constituent une interface de fixation prenant la forme d'une surface plane orientée selon un plan XY.

Chaque ferrure latérale 34, qui est de préférence réalisée d'une seul tenant et en titane, est donc fixée au corps d'attache arrière 42 disposé transversalement au dessous et à distance du longeron inférieur 28. Ce corps 42, présentant également le plan P comme plan de symétrie, est donc au contact des deux surfaces de fixation 38 coplanaires et disposées de part et d'autre du caisson, par l'intermédiaire de ses deux surfaces de fixation 40 également coplanaires, respectivement en contact et en regard deux à deux avec les surfaces 38.

Le corps 42 comporte une chape 50 faisant partie intégrante de la demi-attache arrière droite, sur laquelle est articulée une manille 52 par l'intermédiaire d'un axe 54 orienté selon la direction X. A titre indicatif, un second axe 56 également orienté selon la direction X est également prévu au niveau d'une extrémité inférieure de la manille 52, de manière à articuler cette dernière sur une ferrure/chape (non représentée) solidarisée au carter du turboréacteur 2. Par conséquent, on peut donc comprendre que chaque demi-attache arrière comprend la manille articulée 52, la chape 50 et la ferrure 34, les deux chapes 50 des deux demi-attaches étant par ailleurs réunies au sein du même corps d'attache arrière 42, de préférence réalisé d'un seul tenant.

Il ressort de la description qui précède que l'attache arrière 8 forme deux demi-attaches chacune capable d'assurer la reprise des efforts s'exerçant selon la direction Z. Or dans un mode de réalisation préféré de la présente invention, on prévoit que l'attache arrière 8 est également capable d'assurer la reprise des efforts s'exerçant selon la direction Y.

Pour ce faire, plus précisément en référence à la figure 3, on prévoit que l'attache moteur arrière 8 comporte également un pion de cisaillement 66 orienté selon la direction Z, ce pion 66 étant prévu pour assurer la reprise des efforts s'exerçant selon une direction Y, et plus particulièrement pour autoriser le passage de ces efforts entre le corps d'attache arrière 42 et la structure rigide 10 du mât d'accrochage. Pour ce faire, le pion 66 peut être logé d'une part dans un orifice de la poutre 42, et d'autre part dans une platine 67 rapportée fixement sous le longeron inférieur 28, et de préférence traversé par le plan P.

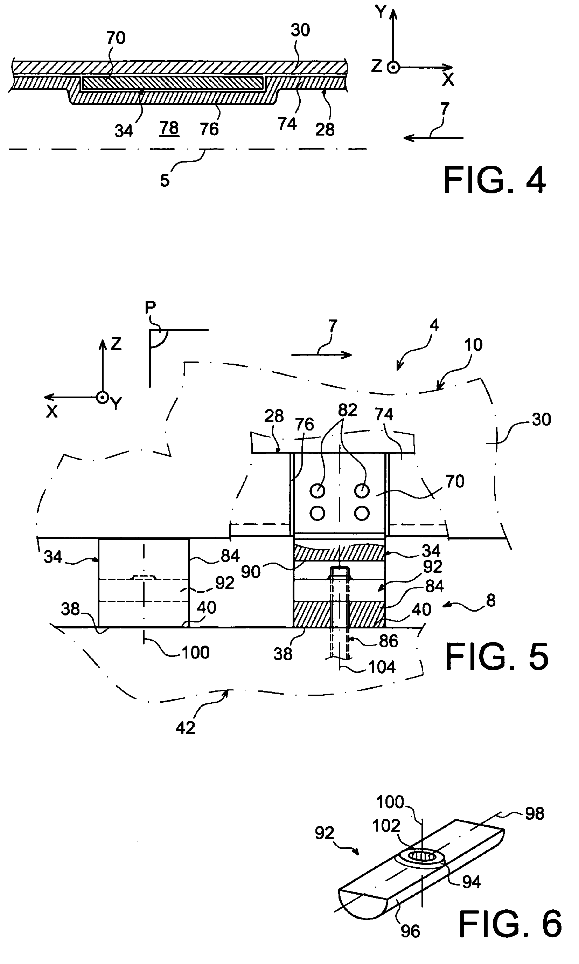

L'une des particularités de la présente invention réside dans la conception des ferrures latérales 34, qui vont à présent être détaillées. A cet égard, il possible de prévoir que chaque demi-attache arrière comprend deux ferrures 34 sensiblement identiques et décalées longitudinalement l'une par rapport à l'autre, tel que cela est représenté sur la figure 5.

Chaque ferrure latérale 34 comporte tout d'abord une première portion ou portion supérieure 70, globalement pincée entre le panneau latéral 30 et le longeron 28, et plus précisément une aile latérale 74 de ce dernier. A titre indicatif, il est connu de l'homme du métier que cette aile 74 est également sensiblement orientée selon un plan XZ de manière à permettre le contact et l'assemblage du panneau latéral 30 sur ce longeron 28, par exemple par rivetage ou éclissage.

Cette première portion 70 est de préférence plane, et donc orientée selon un plan parallèle à celui du panneau 30 associé, à savoir de préférence selon un plan XZ. Elle s'étend verticalement vers le bas, jusqu'à déboucher en dehors du caisson duquel elle fait saillie. Cette portion 70 prend globalement la forme d'une plaque, de préférence de faible épaisseur.

Pour conserver le panneau latéral 30 sensiblement plan malgré la présence de la ferrure 34 entre ce panneau et l'aile 74 du longeron 28, ce dernier comporte un renfoncement 76 servant donc à loger la première portion 70 de la ferrure 34. C'est donc la face intérieure de la première portion 70 qui est au contact du renfoncement 76 défini par l'aile 74 du longeron inférieur, cette portion d'aile étant donc légèrement plus rapprochée d'un axe central longitudinal du caisson. A cet égard, il est noté que les deux renfoncements 76 prévus respectivement au niveau des deux demi-attaches arrière, sont de préférence en regard l'un de l'autre, et forment conjointement un étranglement 78 du longeron 28, selon la direction Y. L'intérieur du renfoncement 76 est de préférence sensiblement plan pour pouvoir épouser au mieux la surface intérieure plane de la première portion 70. De plus, il est de préférence prévu autant de renfoncements 76 que de ferrures 34, à savoir de préférence deux de chaque côté du mât.

Pour assurer la fixation des trois éléments superposés 30, 70, 74, la portion 70 est équipée d'une pluralité de premiers trous d'assemblage 80 la traversant, et destinés à être traversés par des moyens d'assemblage classiques tels que des boulons 82, d'axes parallèles à la direction Y, à savoir orthogonaux aux plans selon lesquels s'étendent parallèlement les trois éléments superposés 30, 70, 74 précités. D'une façon plus générale, quelle que soit la conception retenue pour l'accorchage de la portion 70 sur le caisson, les trous d'assemblage 80 sont traversés par lesdits moyens d'assemblage classiques, tels que des boulons 82, destinés à être soumis à des efforts de cisaillement.

Les boulons 82 s'étendent naturellement également à travers des orifices traversants correspondants agencés sur les deux éléments extérieurs 30, 74 de la superposition. Comme visible sur la figure 5, il est par exemple prévu quatre boulons 82 traversant respectivement quatre premiers trous d'assemblage agencés en carré ou en rectangle sur la première portion pincée 70.

La portion 70 se prolonge vers le bas à partir approximativement de la surface extérieure du longeron 28, par une seconde portion 84 dont l'extrémité inférieure définit la surface de fixation 38.

Pour assurer la fixation du corps d'attache 42 sur la ferrure latérale 34, il est employé une vis de fixation 86, de préférence orientée verticalement. Cette vis 86 dispose d'une tête orientée vers le bas, en appui contre une surface inférieure 88 de la partie supérieure de la poutre 42. Elle s'étend alors vers le haut en traversant successivement la partie supérieure de la poutre 42, les deux surfaces de fixation 38, 40 au contact l'une de l'autre, et une partie inférieure de la seconde portion 84, chacune pourvue d'un alésage vertical prévu à cet effet. Ensuite, la vis 86 a sa partie d'extrémité filetée qui débouche dans un orifice de logement 90 pratiqué dans la portion 84, selon une direction agencée dans un plan XY, comme par exemple la direction X tel que cela est représenté. Bien entendu, ce montage est autorisé en prévoyant que l'alésage prévu dans la partie inférieure de la portion 84 débouche dans l'orifice 90, dans lequel est logé un écrou à barillet 92.

En effet, dans l'orifice 90 de section transversale circulaire, il est prévu un écrou à barillet 92 à collerette déformée 94 assurant un serrage de la vis 86 vissée dans cet écrou, ce dernier prenant une forme quelconque classique et connue de l'homme du métier. Il est rappelé qu'un écrou à barillet est d'une façon générale un écrou qui présente une surface extérieure cylindrique 96 dont l'axe 98 (figure 6) est perpendiculaire à l'axe 100 du trou taraudé 102 qui le traverse, cet axe 100 étant dans l'assemblage concerné confondu avec l'axe vertical 104 de la vis 86. Un écrou à barillet peut être réalisé, selon le cas, en une ou deux pièces. Dans le second cas, il comprend un écrou flottant, monté dans un logement formé dans un support d'écrou cylindrique.

Ainsi, l'écrou à barillet 92, bloqué par l'orifice 90 en rotation et en translation selon l'axe 100 du trou taraudé 102, permet un montage aisé de la vis 86 destinée à être vissée dans ce même trou taraudé 102 se prolongeant par la collerette 94 déformée par exemple elliptiquement, pour permettre le blocage en rotation selon la direction Z de cette vis 86.

L'une des particularités associées à cet assemblage est donc que l'écrou à barillet 92 est situé extérieurement par rapport au caisson 10, de sorte que son accès ne pose aucun problème particulier aux opérateurs. A cet égard, on prévoit pour permettre une extraction aisée de cet écrou 92 logé dans l'orifice 90, de faire en sorte que cet écrou se situe entièrement au-delà du longeron inférieur 28, dans la direction Z et vers le bas. L'écrou 94 est par conséquent situé de manière suffisamment dégagée du caisson pour autoriser son retrait aisé de l'orifice 90, indifféremment débouchant ou traversant. Dans un tel cas, il suffit uniquement de retirer la vis 86 pour pouvoir extraire l'écrou 92 de son logement 90, par glissement.

Comme cela est montré sur les figures 3 et 5, on fait de préférence en sorte que l'intégralité de l'orifice de réception 90 prévu pour le logement de l'écrou à barillet 92 soit entièrement situé dans la direction Z et vers le bas au-delà du longeron inférieur 28, entre ce dernier et la poutre 42.

Pour éviter d'introduire un moment parasite de flexion dans le caisson, on fait en sorte qu'en coupe transversale quelconque traversant l'orifice de logement 90, ou en en vue de face, l'axe 104 de préférence vertical de la vis de fixation 86 traverse chacun des premiers trous d'assemblage 80 de la ferrure 34 associée à cette vis. Cette spécificité est montrée sur la figure 3 dont une partie est en coupe transversale et l'autre en vue de face, l'angle de vue du mât étant le même. La traversée de trous 80 par l'axe 104 s'effectue bien entendu fictivement, préférentiellement de manière orthogonale aux axes de ces trous 80 orientés selon la direction Y.

A titre indicatif, en vue de côté telle que montrée sur la figure 5, l'axe 104 ne traverse pas forcement ces orifices qui peuvent être disposés de part et d'autre de cet axe 104, par exemple disposés symétriquement par rapport à celui-ci.

Bien entendu, diverses modifications peuvent être apportées par l'homme du métier au mât d'accrochage 4 de turboréacteur 2 pour aéronef qui vient d'être décrit, uniquement à titre d'exemple non limitatif. A cet égard, on peut notamment indiquer qui si le mât 4 a été présenté dans une configuration adaptée pour qu'il soit suspendu sous la voilure de l'aéronef, ce mât 4 pourrait également se présenter dans une configuration différente lui permettant d'être monté au-dessus de cette même voilure.

## Revendications

1. Mât d'accrochage (4) pour moteur (2) d'aéronef, ledit mât comportant une structure rigide (10) formant caisson ainsi qu'un système de montage du moteur (11) monté fixement sur ladite structure rigide (10) et comportant notamment une attache moteur arrière (8) comprenant un corps d'attache (42) sur lequel est articulée au moins une manille (52), l'attache moteur arrière (8) présentant de plus au moins une ferrure latérale (34) disposée de chaque côté du caisson, chaque ferrure latérale (34) comprenant une première portion (70) percée de premiers trous d'assemblage (80) traversés par des moyens d'assemblage pour sa fixation sur ledit caisson, et comportant une seconde portion (84) définissant une surface de fixation (38) en contact avec une surface de fixation (40) prévue sur le corps d'attache moteur arrière (42),
**caractérisé en ce que** ladite seconde portion (84) présente un orifice de logement (90) dont l'axe est orienté selon une direction longitudinale (X) du mât, cet orifice logeant un écrou à barillet (92) recevant une vis de fixation (86) en appui contre le corps d'attache moteur arrière (42) et orientée selon une direction verticale (Z) du mât, et **en ce que** le plan comprenant l'axe dudit orifice de logement (90) et l'axe vertical (104) de ladite vis de fixation (86) traverse lesdits premiers trous d'assemblage (80).

2. Mât d'accrochage (4) selon la revendication 1, **caractérisé en ce que** ladite structure rigide (10) formant caisson présente deux panneaux latéraux (30) ainsi qu'un longeron (28) faisant face au corps d'attache moteur arrière (42), ledit longeron (28) comportant deux ailes latérales (74) montées fixement respectivement sur lesdits deux panneaux latéraux (30), et **en ce que** ladite première portion (70) de chacune desdites deux ferrures latérales (34) de l'attache arrière est interposée entre l'une desdites deux ailes latérales (70) et son panneau latéral associé (30).

3. Mât d'accrochage (4) selon la revendication 2, **caractérisé en ce que** ledit longeron (28) comporte un renfoncement (78) pour le logement de chaque première portion (70).

4. Mât d'accrochage (4) selon l'une quelconque des revendications précédentes, **caractérisé en ce que** ledit orifice de logement (90) recevant l'écrou à barillet (92) se trouve agencée entièrement extérieurement par rapport à la structure rigide (10) formant caisson, entre cette dernière et ledit corps d'attache moteur arrière (42).

5. Mât d'accrochage (4) selon l'une quelconque des revendications précédentes, **caractérisé en ce que** ledit caisson (10) est formé par l'assemblage d'un longeron supérieur (26), d'un longeron inférieur (28), de deux panneaux latéraux (30) et de nervures transversales (32) reliant lesdits longerons et panneaux, ladite surface de fixation (38) et ledit corps d'attache moteur arrière (42) étant situés sous et à distance dudit longeron inférieur (28).

6. Mât d'accrochage (4) selon l'une quelconque des revendications précédentes, **caractérisé en ce que** ladite attache moteur arrière (8) comporte en outre au moins un pion de cisaillement vertical (66) traversant le corps d'attache (42), ledit pion de cisaillement (66) étant capable d'assurer la reprise des efforts s'exerçant selon une direction transversale (Y) dudit mât.

7. Mât d'accrochage (4) selon l'une quelconque des revendications précédentes, **caractérisé en ce que** ladite surface de fixation (38) de chacune desdites ferrures latérales (34) de l'attache moteur arrière (8) prend la forme d'une surface plane orientée selon un plan défini par une direction transversale (Y) et une direction longitudinale (X) du mât.

8. Mât d'accrochage (4) selon l'une quelconque des revendications précédentes, **caractérisé en ce que** ladite attache moteur arrière (8) est conçue de manière à définir deux demi-attaches chacune capable d'assurer la reprise des efforts s'exerçant selon une direction verticale (Z) dudit mât.

9. Ensemble moteur (1) pour aéronef **caractérisé en ce qu'**il comprend un mât d'accrochage (4) selon l'une quelconque des revendications précédentes, ainsi qu'un moteur (2) monté fixement sur ledit mât.

10. Aéronef comprenant au moins un ensemble moteur (1) selon la revendication 9.

## Claims

1. The attachment pylon (4) for aircraft engine (2), said pylon comprising a rigid structure (10) forming a caisson and a mounting system of the engine (11) mounted fixed on said rigid structure (10) and especially comprising a rear engine attachment (8) comprising an attachment body (42) on which is articulated at least one shackle (52), the rear engine attachment (8) also having at least one lateral fitting (34) arranged on either side of the caisson, each lateral fitting (34) comprising a first portion (70) pierced by first assembly holes (80) to enable it to be fixed to said caisson, and comprising a second portion (84) defining a fixing surface (38) in contact with a fixing surface (40) provided on the rear engine attachment body (42),
**characterised in that** said second portion (84) has a housing orifice (90) having an axis oriented along the longitudinal direction (X) of the pylon, this housing orifice housing a self-locking nut (92) receiving a fixing screw (86) supported against the rear engine attachment body (42) and oriented along a vertical directon (Z) of the pylon, and **in that** the plane comprising the axis of said housing orifice (90) and the vertical axis (104) of said fixing screw (86) passes through said first assembly holes (80).

2. The attachment pylon (4) as claimed in Claim 1, **characterised in that** said rigid structure (10) forming a caisson has two lateral panels (30) and a longeron (28) facing the rear engine attachment body (42), said longeron (28) comprising two lateral wings (74) mounted fixed respectively on said two lateral panels (30), and **in that** said first portion (70) of each of said two lateral fittings (34) of the rear attachment is interposed between one of said two lateral wings (70) and its associated lateral panel (30).

3. The attachment pylon (4) as claimed in Claim 2, **characterised in that** said longeron (28) comprises a reinforcement (78) for housing each first portion (70).

4. The attachment pylon (4) as claimed in any one of the preceding claims, **characterised in that** said housing orifice (90) receiving the self-locking nut (92) is arranged entirely externally relative to the rigid structure (10) forming a caisson, between the latter and said rear engine attachment body (42).

5. The attachment pylon (4) as claimed in any one of the preceding claims, **characterised in that** said caisson (10) is formed by assembling an upper longeron (26), a lower longerons (28), two lateral panels (30) and transversale grooves (32) connecting said longerons and panels, said fixing surface (38) and said rear engine attachment body (42) being located under and at a distance from said lower longeron (28).

6. The attachment pylon (4) as claimed in anyone of the preceding claims, **characterised in that** said rear engine attachment (8) further comprises at least one vertical shear slug (66) passing through the attachment body (42), said shear slug (66) being capable of ensuring thrust force collection exerted according to a transversal direction (Y) of said pylon.

7. The attachment pylon (4) as claimed in any one of the preceding claims, **characterised in that** said fixing surface (38) of each of said lateral fittings (34) of the rear engine attachment (8) takes the form of a surface plane oriented according to a plane defined by a transversal direction (Y) and a longitudinal direction (X) of the pylon.

8. The attachment pylon (4) as claimed in any one of the preceding claims, **characterised in that** said rear engine attachment (8) is designed so as to define two half-fasteners each capable of ensuring thrust force collection exerted according to a vertical direction (Z) of said pylon.

9. An aircraft engine assembly (1) **characterised in that** it comprises an attachment pylon (4) as claimed in any one of the preceding claims, and an engine (2) mounted fixed on said pylon.

10. Aircraft comprising at least one engine assembly (1) as claimed in Claim 9.

## Patentansprüche

1. Aufhängungssystem (4) für ein Luftfahrzeugtriebwerk (2), wobei das System eine starre Struktur (10), die einen Kasten bildet, sowie ein Triebwerkanbringungssystem (11), das fest an der starren Struktur (10) angebracht ist und insbesondere eine hintere Triebwerkbefestigung (8) aufweist, die einen Befestigungskörper (42) umfasst, an dem mindestens ein Schwingarm (52) beweglich angebracht ist, umfasst, wobei die hintere Triebwerkbefestigung (8) ferner mindestens einen, an jede Seite des Kastens angeordneten Seitenbeschlag (34) aufweist, wobei jeder Seitenbeschlag (34) einen ersten Abschnitt (70) aufweist, der mit ersten Verbindungslöchern (80) durchsetzt ist, durch die Verbindungsmittel für dessen Befestigung an dem Kasten hindurchgehen, und einen zweiten Abschnitt (84) aufweist, der eine Befestigungsoberfläche (38) festlegt, die in Kontakt mit einer an dem Körper der hinteren Motorbefestigung (42) angebrachten Befestigungsoberfläche (40) steht,
**dadurch gekennzeichnet, dass** der zweite Abschnitt (84) eine Lagerungsöffnung (90) aufweist, deren Achse längs einer Längsrichtung (X) des Systems ausgerichtet ist, wobei diese Öffnung eine Zylindermutter (92) beherbergt, die eine Befestigungsschraube (86) aufnimmt, die sich am Körper der hinteren Triebwerkbefestigung (42) abstützt und in einer Vertikalrichtung (Z) des Systems ausgerichtet ist, und dass die Ebene, die die Achse der Lagerungsöffnung (90) und die vertikale Achse (104) der Befestigungsschraube (86) umfasst, durch die ersten Verbindungslöcher (80) hindurchgeht.

2. Aufhängungssystem (4) nach Anspruch 1, **dadurch gekennzeichnet, dass** die starre Struktur (10), die einen Kasten bildet, zwei seitliche Platten (30) sowie einen auf den Körper der hinteren Triebwerkbefestigung (42) gerichteten Längsträger (28) aufweist, wobei der Längsträger (28) zwei seitliche Flügelstücke (74) aufweist, die jeweils fest an den zwei seitlichen Platten (30) befestigt sind, und dass der erste Abschnitt (70) der beiden einzelnen Seitenbeschläge (34) der hinteren Befestigung zwischen eines der seitlichen Flügelstücke (70) und die entsprechende seitliche Platte eingefügt ist.

3. Aufhängungssystem (4) nach Anspruch 2, **dadurch gekennzeichnet, dass** der Längsträger (28) eine Vertiefung (78) zur Beherbergung der einzelnen ersten Abschnitte (70) aufweist.

4. Aufhängungssystem (4) nach einem der vorhergehenden Ansprüche, **dadurch gekennzeichnet, dass** die Lagerungsöffnung (90), die die Zylindermutter (92) aufnimmt, sich vollständig außerhalb in Bezug auf die starre Struktur (10), die einen Kasten bildet, zwischen dieser letzteren und dem Körper der hinteren Triebwerkbefestigung (42) angeordnet befindet.

5. Aufhängungssystem (4) nach einem der vorhergehenden Ansprüche, **dadurch gekennzeichnet, dass** der Kasten (10) durch die Verbindung von einem oberen Längsträger (26), einem unteren Längsträger (28), zwei seitlichen Platten (30) und Querrippen (32), die die Längsträger und die Platten verbinden, gebildet ist, wobei sich die Befestigungsoberfläche (38) und der Körper der hinteren Triebwerkbefestigung (42) unter dem unteren Längsträger (28) und von diesem beabstandet befinden.

6. Aufhängungssystem (4) nach einem der vorhergehenden Ansprüche, **dadurch gekennzeichnet, dass** die hintere Triebwerkbefestigung (8) ferner mindestens einen vertikalen Scherungsbolzen (66), der durch den Befestigungskörper (42) hindurchgeht, aufweist, wobei der Scherungsbolzen (66) die Aufnahme von in einer Querrichtung (Y) des Systems auftretenden Kräften gewährleisten kann.

7. Aufhängungssystem (4) nach einem der vorhergehenden Ansprüche, **dadurch gekennzeichnet, dass** die Befestigungsoberfläche (38) von jedem der Seitenbeschläge (34) der hinteren Triebwerkbefestigung (8) die Form einer planen Oberfläche aufweist, die in einer durch eine Querrichtung (Y) und eine Längsrichtung (X) des Systems festgelegten Ebene ausgerichtet ist.

8. Aufhängungssystem (4) nach einem der vorhergehenden Ansprüche, **dadurch gekennzeichnet, dass** die hintere Triebwerkbefestigung (8) derart konstruiert ist, dass zwei Halbbefestigungen festgelegt sind, die jeweils die Aufnahme von in einer Vertikalrichtung (Z) des Systems auftretenden Kräften gewährleisten können.

9. Triebwerksystem (1) für ein Luftfahrzeug, **dadurch gekennzeichnet, dass** es ein Aufhängungssystem (4) nach einem der vorhergehenden Ansprüche sowie ein fest an dem System angebrachtes Triebwerk (2) umfasst.

10. Luftfahrzeug, das mindestens ein Triebwerksystem (1) nach Anspruch 9 umfasst.
